# EUROPEAN PATENT APPLICATION

(11) **EP 4 130 200 A1**
(43) Date of publication of application: **08.02.2023**
(21) Application number: 22188660.9
(22) Date of filing: 04.08.2022
(51) Int. Cl.: C10G 1/10, C10G 1/00, C10G 25/00, C10G 25/12, C10B 53/07, C10G 45/02, C10G 65/04

(54) **DEVICE AND METHOD FOR REFINING WASTE PLASTIC PYROLYSIS OIL**

(30) Priority: 05.08.2021 KR 20210103122
(71) Applicant: SK Innovation Co., Ltd., Seoul 03188 (KR); SK Geo Centric Co., Ltd., Jongno-gu Seoul 03161 (KR)
(72) Inventor: KIM, Ka Young, 34124 Daejeon (KR); KIM,, Ok Youn, 34124 Daejeon (KR); PARK, Young Moo, 34124 Daejeon (KR); JEON, Hee Jung, 34124 Daejeon (KR); LEE, Ho Won, 34124 Daejeon (KR); KWAK, Byoung Kyu, 34124 Daejeon (KR)
(74) Representative: Frick, Robert

(57) **Abstract**

Provided are an apparatus and a method for refining pyrolysis oil in which a dechlorination reaction is performed at a first temperature under a first hydrotreating catalyst, a denitrification reaction is performed at a second temperature higher than the first temperature under a second hydrotreating catalyst, and chlorine adsorption by an adsorbent is performed after the dechlorination reaction, thereby preventing production of an ammonium salt (NH₄Cl), and providing refined oil which is excellent in prevention of corrosion of a reactor, improvement of durability, occurrence of differential pressure, and process efficiency, has very low contents of impurities such as chlorine, nitrogen, and metal and olefin, and has excellent quality.

## Description

### TECHNICAL FIELD

The following disclosure relates to an apparatus and a method for refining waste plastic pyrolysis oil.

### BACKGROUND

Waste plastic is manufactured using petroleum as a raw material, and has a low recyclability and is mostly disposed of as garbage. These forms of wastes decompose in their natural state, and since the decomposition takes a long time, they pollute the soil and cause serious environmental pollution. As a method of recycling waste plastic, the waste plastic may be pyrolyzed and converted into oil, which is referred to as waste plastic pyrolysis oil.

However, since pyrolysis oil obtained by pyrolyzing waste plastic has a higher content of impurities such as chlorine, nitrogen, and metal as compared with oil manufactured from crude oil by a common method, it may not be directly used as high value-added fuels such as gasoline and diesel oil and should go through a refining process.

As such, as a refining method for removing impurities such as chlorine, nitrogen, and metal contained in the waste plastic pyrolysis oil, a dechlorination/denitrification method by reacting waste plastic pyrolysis oil and hydrogen in the presence of a hydrotreating catalyst or a method of removing chlorine contained in the waste plastic pyrolysis oil by adsorption using a chlorine adsorbent.

Specifically, U.S. Patent Registration No. 3935295 discloses a technology for removing chloride pollutants from various hydrocarbon oils. The technology is a conventional technology of hydrogenating oil in the presence of a hydrotreating catalyst in a first reactor, introducing a fluid including produced hydrogen chloride (HCl) refined oil to a second reactor, and then removing a chlorine component included in the fluid by adsorption using an adsorbent.

However, as described in the conventional technology, when oil and hydrogen react in the presence of a hydrotreating catalyst, a nitrogen compound and a chlorine compound such as hydrogen chloride produced with the refined oil react to produce an ammonium salt (NH₄Cl), and this ammonium salt causes various process problems. Specifically, an ammonium salt produced inside the reactor by the reaction of oil and hydrogen causes corrosion of the reactor to decrease durability, and causes many process problems such as occurrence of differential pressure and lower process efficiency therefrom.

Therefore, in a process of refining waste plastic pyrolysis oil containing impurities including chlorine and nitrogen, an apparatus and a method for refining waste plastic pyrolysis oil in which a chlorine component and a nitrogen component are prevented from reacting to produce an ammonium salt (MH₄Cl), or produce the ammonium salt in a minimum amount, is demanded.

### [Related Art Documents]

### [Patent Documents]

(Patent Document 1) U.S. Patent Registration No. 3935295 (registration date: January 27, 1976)

### SUMMARY

An embodiment is directed to providing an apparatus and a method for refining waste plastic pyrolysis oil which prevent or minimize production of an ammonium salt (NH₄Cl), and have an improvement in prevention of corrosion of a reactor, durability, differential pressure occurrence, and process efficiency, in a process of refining waste plastic pyrolysis oil containing impurities including chlorine and nitrogen.

Another embodiment is directed to providing an apparatus and a method for refining waste plastic pyrolysis oil having a very low content of impurities such as chlorine, nitrogen, and metal, and a very low content of olefin and having excellent quality.

In one general aspect, an apparatus for refining waste plastic pyrolysis oil includes: a guard bed including a reaction region to which the waste plastic pyrolysis oil and hydrogen are introduced and in which a dechlorination reaction is performed at a first temperature under a first hydrotreating catalyst; and a main bed including a reaction region to which a fluid including a product discharged from the guard bed is introduced and in which a denitrification reaction is performed at a second temperature higher than the first temperature under a second hydrotreating catalyst, wherein the guard bed or the main bed further includes an adsorption region to which a fluid passing through the reaction region is introduced and in which impurities are removed from the fluid by an adsorbent for removing a chlorine component.

In an embodiment, the guard bed may include the adsorption region, a fluid passing through the reaction region may be introduced to an adsorption region in the guard bed, the impurities may be removed from the fluid by an adsorbent in the adsorption region, and the fluid from which the impurities have been removed in the adsorption region 120 may be introduced to the reaction region in the main bed 200.

In an embodiment, the main bed may include the adsorption region, a fluid passing through the reaction region may be introduced to an adsorption region in the main bed, and the impurities may be removed from the fluid by an adsorbent in the adsorption region.

The apparatus for refining waste plastic pyrolysis oil according to an embodiment may further include an adsorption bed which is disposed between the guard bed and the main bed and includes an adsorption region to which a fluid including a product discharged from the guard bed is introduced and in which the impurities are removed from the fluid by an adsorbent, wherein a fluid from which the impurities have been removed in the adsorption region in the adsorption bed may be introduced to the reaction region in the main bed.

In another general aspect, an apparatus for refining waste plastic pyrolysis oil includes: a guard bed including a reaction region to which the waste plastic pyrolysis oil and hydrogen are introduced and in which a dechlorination reaction is performed at a first temperature under a first hydrotreating catalyst; a main bed including a reaction region to which a fluid including a product discharged from the guard bed is introduced and in which a denitrification reaction is performed at a second temperature higher than the first temperature under a second hydrotreating catalyst to suppress production of ammonium chloride; and an adsorption bed which is disposed between the guard bed and the main bed or at a rear end of the main bed and includes an adsorption region to which a fluid including a product discharged from the guard bed or the main bed is introduced and in which impurities are removed from the fluid by an adsorbent for removing a chlorine component.

In an embodiment, the adsorption bed may include a first adsorption bed disposed between the guard bed and the main bed, or a second adsorption bed disposed at a rear end of the main bed, wherein the first adsorption bed may include an adsorption region to which a fluid discharged from the guard bed is introduced and in which impurities are removed from the fluid by an adsorbent and the fluid from which the impurities have been removed in the adsorption region is introduced to the reaction region in the main bed, and the second adsorption bed may include an adsorption region to which a fluid discharged from the main bed is introduced and in which impurities are removed from the fluid by an adsorbent.

In an embodiment, the first adsorption bed may include a plurality of adsorption beds including a 1-1 adsorption bed and a 1-2 adsorption bed in which each of the adsorption beds is connected in parallel with each other, the second adsorption bed includes a plurality of adsorption beds including a 2-1 adsorption bed and a 2-2 adsorption bed in which each of the adsorption beds is connected in parallel with each other, and an adsorption-regeneration control unit which switches the adsorption beds connected in parallel with each other may be further included.

In an embodiment, the 1-1 adsorption bed and the 1-2 adsorption bed may be connected between the guard bed and the main bed in which each of the adsorption beds is connected in parallel with each other, the 2-1 adsorption bed and the 2-2 adsorption bed may be connected to the rear end of the main bed in which each of the adsorption beds is connected in parallel with each other, and the adsorption-regeneration control unit may perform control of a 1-1 mode in which a connection of the guard bed, the 1-2 adsorption bed, and the main bed is cut to regenerate the 1-2 adsorption bed and perform adsorption by the 1-1 adsorption bed; or a 1-2 mode in which a connection of the guard bed, the 1-1 adsorption bed, and the main bed is cut to regenerate the 1-1 adsorption bed and perform adsorption by the 1-2 adsorption bed, or may perform control of a 2-1 mode in which a connection of the main bed and the 202 adsorption bed is cut to regenerate the 2-2 adsorption bed and perform adsorption by the 2-1 adsorption bed; or a 2-2 mode in which a connection of and the main bed and the 2-1 adsorption bed is cut to regenerate the 2-1 adsorption bed and perform adsorption by the 2-2 adsorption bed.

In an embodiment, the guard bed or the main bed may further include an adsorption region to which a fluid passing through the reaction region is introduced and in which impurities are removed from the fluid by an adsorbent.

In an embodiment, the first temperature may be 150 to 300°C and the second temperature may be higher than 300°C and 400°C or less.

In an embodiment, a difference between the first temperature and the second temperature may be 50 to 250°C.

In an embodiment, a pressure of the reaction region may be 1 to 100 bar.

In an embodiment, a volume flow ratio of the waste plastic pyrolysis oil and hydrogen introduced to the reaction region based on 1 atm may be 1:300 to 3,000.

In an embodiment, the adsorbent may include any one or two or more selected from metal oxides, metal hydroxides, metal carbides, and the like, and the metal may include any one or two or more selected from calcium, magnesium, aluminum, iron, and the like.

In an embodiment, the first hydrotreating catalyst and the second hydrotreating catalyst may include any one or two or more selected from a hydrodesulfurization catalyst, a hydrodenitrification catalyst, a hydrodemetallization catalyst, and the like.

In an embodiment, the waste plastic pyrolysis oil may include 0.03 wt% or more of nitrogen and 0.003 wt% or more of chlorine based on the total weight of the pyrolysis oil.

In another general aspect, a method for refining waste plastic pyrolysis oil includes: a chlorine removal step of dechlorinating the waste plastic pyrolysis oil and hydrogen at a first temperature under a first hydrotreating catalyst; and a nitrogen removal step of denitrifying a fluid including a product from the dechlorination reaction at a second temperature higher than the first temperature under a second hydrotreating catalyst, wherein an impurity removal step of removing impurities by an adsorbent is further included after the chlorine removal step, and the adsorbent includes any one or two or more selected from metal oxides, metal hydroxides, and metal carbides.

In an embodiment, the impurity removal step may be performed between the chlorine removal step and the nitrogen removal step or after the nitrogen removal step.

In an embodiment, in the nitrogen removal step, ammonia gas may be produced by the denitrification reaction.

Other features and aspects will be apparent from the following detailed description, the drawings, and the claims.

### BRIEF DESCRIPTION OF THE DRAWINGS

FIGS. 1 and 3 to 5 are process diagrams in which a guard bed or a main bed having a reaction region and an adsorption region is included in the apparatus for refining waste plastic pyrolysis oil.
FIG. 2 shows a reactor used in the apparatus for refining waste plastic pyrolysis oil.
FIGS. 6 to 8 are process diagrams in which an adsorption bed having an adsorption region is included in the apparatus for refining waste plastic pyrolysis oil.
FIG. 9 is a process diagram in which a guard bed and a main bed having a reaction region and an adsorption region, and an adsorption bed having an adsorption region are included in the apparatus for refining waste plastic pyrolysis oil.

### DETAILED DESCRIPTION OF EMBODIMENTS

Hereinafter, the apparatus and the method for refining waste plastic pyrolysis oil will be described in detail with reference to the accompanying drawings.

The drawings illustrated in the present specification are provided by way of example so that the idea may be sufficiently conveyed to a person skilled in the art. Therefore, the present invention is not limited to the provided drawings, but may be embodied in many different forms, and the drawings may be exaggerated in order to clear the spirit of the present invention.

Technical terms and scientific terms used in the present specification have the general meaning understood by those skilled in the art to which the present invention pertains unless otherwise defined, and a description for the known function and configuration obscuring the gist of the present invention will be omitted in the following description and the accompanying drawings.

The singular form of the term used herein may be intended to also include a plural form, unless otherwise indicated.

The numerical range used in the present specification includes all values within the range including the lower limit and the upper limit, increments logically derived in a form and span in a defined range, all double limited values, and all possible combinations of the upper limit and the lower limit in the numerical range defined in different forms. Unless otherwise defined in the specification, values which may be outside a numerical range due to experimental error or rounding of a value are also included in the defined numerical range.

The term "comprise" mentioned in the present specification is an open-ended description having a meaning equivalent to the term such as "is/are provided", "contain", "have", or "is/are characterized", and does not exclude elements, materials, or processes which are not further listed.

The unit of % used herein without particular mention refers to % by weight, unless otherwise defined.

The term "layer" or "film" mentioned in the present specification means that each material forms a continuum and has a dimension having a relatively small thickness to a width and a length. Accordingly, it should not be interpreted as a two-dimensional flat plane by the term "layer" or "film".

In refining waste plastic pyrolysis oil, when impurities are removed by a hydrogenation reaction under a hydrotreating catalyst, hydrogen chloride (HCl) which is a by-product produced by the hydrogenation reaction is produced. Hydrogen chloride causes corrosion of an apparatus itself, and in particular, reacts with a nitrogen compound in an apparatus to produce an ammonium salt (NH₄Cl), and the ammonium salt causes many process problems such as occurrence of differential pressure and decreased process efficiency therefrom as well as decreased durability of a reactor.

U.S. Patent Registration No. 3935295 uses a method of removing the produced hydrogen chloride using an adsorbent by adsorption, by installing the adsorbent in the rear end of a hydrogenation reactor, for removing hydrogen chloride. However, in the U.S, Patent Registration, since a nitrogen compound is produced simultaneously with hydrogen chloride during the hydrogenation reaction, hydrogen chloride and a nitrogen compound react to produce an ammonium salt, and thus, conventionally, hydrogen chloride is removed by adsorption using a reactor with an adsorbent in the rear end of the hydrogenation reactor, but eventually, accumulation of an ammonium salt produced inside the reactor may not be avoided.

Thus, the present invention provides an apparatus and a method for refining waste plastic pyrolysis oil which minimize production and accumulation of an ammonium salt in the apparatus to prevent many process problems such as corrosion of the apparatus, occurrence of differential pressure, and decreased process efficiency therefrom, by a technological configuration of performing a dechlorination reaction at a first temperature under a hydrotreating catalyst and then performing a denitrification reaction at a second temperature higher than the first temperature under a hydrotreating catalyst, wherein a chlorine component is adsorbed by an adsorbent and removed after the dechlorination reaction.

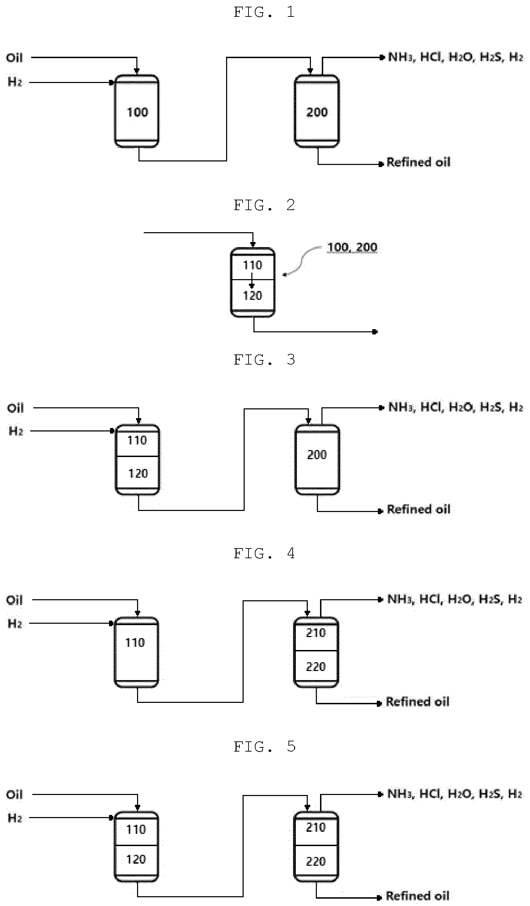

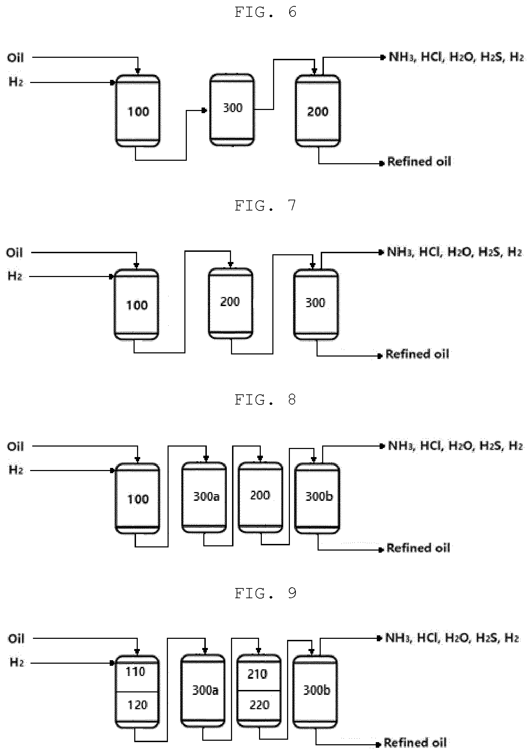

Specifically, the apparatus for refining waste plastic pyrolysis oil includes a guard bed 100 which is a first reactor with a hydrotreating catalyst and a main bed 200 which is a second reactor with a hydrotreating catalyst; and may have a first embodiment in which the first reactor (guard bed) or the second reactor (main bed) has a reaction region in which a dechlorination reaction is performed, or an adsorption region with a reaction region in which a denitrification reaction is performed, formed inside the reactor, as shown in FIGS. 1 and 3 to 5, or a second embodiment in which a third reactor (adsorption bed) with an adsorption region, installed at a rear end of the first reactor (guard bed) having a reaction region formed inside, in which a dechlorination reaction is performed, is used, as shown in FIGS. 6 to 8.

In an embodiment, a guard bed 100 which is provided with a hydrotreating catalyst to perform a hydrogenation reaction; and a main bed 200 to which a fluid including a product from the guard bed 100 is introduced are used, and a hydrogenation reaction is performed in both beds. Here, in the guard bed 100, a hydrogenation reaction, specifically, a dechlorination reaction, is performed at a first temperature, and in the main bed 200, a hydrogenation reaction, specifically, a denitrification reaction, is performed at a second temperature. That is, a dechlorination reaction is performed in the guard bed 100, a denitrification reaction is performed in the main bed 200, and a difference in the type of decomponent of each reaction may be determined by a reaction temperature.

The first temperature is a temperature at which the dechlorination reaction is performed, and the second temperature is a temperature at which the denitrification reaction is performed. Specifically, the first temperature at which the dechlorination reaction is performed may be 150 to 300°C, specifically 180 to 290°C, and more specifically 220 to 280°C, and the second temperature at which the denitrification reaction is performed may be higher than 300°C and 400°C or less, specifically 310 to 390°C, and more specifically 320 to 380°C. In addition, as a preferred example, a difference between the first temperature and the second temperature may be 50 to 250°C, specifically 60 to 250°C, and more specifically 70 to 150°C.

A reaction pressure of the guard bed 100 or the main bed 200 is not largely limited, but 100 bar or less, specifically 1 to 100 bar, and more specifically 40 to 100 bar may be preferred in terms of further suppressing production of an ammonium salt.

As such, in an embodiment, a plurality of reactors (guard bed and main bed) in which a hydrogenation reaction is performed are connected to perform the hydrogenation reaction, and chlorination adsorption using an adsorbent is performed after the dechlorination reaction in a process of performing a denitrification reaction in the main bed 200 after performing the dechlorination reaction in the guard bed 100, thereby minimizing production and accumulation of an ammonium salt in the reactor.

A reaction region 110 in which the dechlorination reaction is performed is formed in the guard bed 100, and in the reaction region 110, a reaction of removing a part of olefin and metal impurities from hydrocarbon oil which is waste plastic pyrolysis oil is performed in addition to the dechlorination reaction. Further, a reaction region 210 in which the denitrification reaction is performed is formed in the main bed 200, and in the reaction region 210, a reaction of removing all remaining impurities is performed in addition to the denitrification reaction.

Hereinafter, a first embodiment and a second embodiment which are specific embodiments of the apparatus for refining waste plastic pyrolysis oil will be described.

As the first embodiment, the apparatus for refining waste plastic pyrolysis oil includes: a guard bed 100 including a reaction region 110 to which the waste plastic pyrolysis oil and hydrogen are introduced and in which a dechlorination reaction is performed at a first temperature under a first hydrotreating catalyst; and a main bed 200 including a reaction region 210 to which a fluid including a product discharged from the guard bed 100 is introduced and in which a denitrification reaction is performed at a second temperature higher than the first temperature under a second hydrotreating catalyst, wherein the guard bed 100 or the main bed 200 further includes an adsorption region to which a fluid passing through the reaction region is introduced and in which impurities are removed from the fluid by an adsorbent for removing a chlorine component.

For more details of the first embodiment, Embodiment 1-1 is a case in which a reaction region and an adsorption region are disposed in a guard bed, as shown in FIG. 3. Specifically, the guard bed 100 may include an adsorption region 120, the fluid passing through the reaction region 110 may be introduced to the adsorption region 120 in the guard bed 100, the impurities may be removed from the fluid by an adsorbent in the adsorption region 120, and the fluid from which the impurities have been removed in the adsorption region 120 may be introduced to the reaction region 210 in the main bed 200. That is, the guard bed 100 may further include the adsorption region 120 to which a fluid passing through the reaction region 110 in the guard bed 100 is introduced and in which impurities are removed from the fluid by an adsorbent.

As shown in FIG. 4, Embodiment 1-2 is a case in which a reaction region and an adsorption region are disposed in a main bed. Specifically, the main bed 200 may include the adsorption region 220, the fluid passing through the reaction region 210 may be introduced to an adsorption region 220 in the main bed 200, and the impurities may be removed from the fluid by an adsorbent in the adsorption region 220. That is, the main bed 200 may further include the adsorption region 220 to which a fluid passing through the reaction region 210 in the main bed 200 is introduced and in which impurities are removed from the fluid by an adsorbent.

As shown in FIG. 5, Embodiment 1-3 is a combination of Embodiment 1-1 and Embodiment 1-2, and is a case in which the reaction region and the adsorption region are disposed in the guard bed 100, and the reaction region and the adsorption region are also disposed in the main bed 200. Specifically, the guard bed 100 may include the adsorption region, the fluid passing through the reaction region 110 may be introduced to the adsorption region 120 in the guard bed 100, the impurities may be removed from the fluid by an adsorbent in the adsorption region 120, and the fluid from which the impurities have been removed in the adsorption region 120 may be introduced to the reaction region 210 in the main bed 200. In addition, the main bed 200 may include the adsorption region 220, the fluid passing through the reaction region 210 may be introduced to an adsorption region 220 in the main bed 200, and the impurities may be removed from the fluid by an adsorbent in the adsorption region 220.

As the second embodiment, the apparatus for refining waste plastic pyrolysis oil includes: a guard bed 100 including a reaction region 110 to which the waste plastic pyrolysis oil and hydrogen are introduced and in which a dechlorination reaction is performed at a first temperature under a first hydrotreating catalyst; a main bed 200 including a reaction region 210 to which a fluid including a product discharged from the guard bed 100 is introduced and in which a denitrification reaction is performed at a second temperature higher than the first temperature under a second hydrotreating catalyst to suppress production of ammonium chloride; and an adsorption bed 300 which is disposed between the guard bed 100 and the main bed 200 or at a rear end of the main bed 200 and includes an adsorption region to which a fluid including a product discharged from the guard bed 100 or the main bed 200 is introduced and in which impurities are removed from the fluid by an adsorbent for removing a chlorine component.

For more details of the second embodiment, as Embodiment 2-1, the adsorption bed 300 may be a first adsorption bed 300a disposed between the guard bed 100 and the main bed 200, as shown in FIG. 6. Here, the first adsorption bed 300a includes an adsorption region to which a fluid discharged from the guard bed 100 is introduced and in which impurities are removed from the fluid by an adsorbent, and a fluid from which impurities have been removed in the adsorption region may be introduced to the reaction region 210 in the main bed 200.

As shown in FIG. 7, as Embodiment 2-2, the adsorption bed 300 may be a second adsorption bed 300b disposed at a rear end of the main bed 200. The second adsorption bed 300b may include an adsorption region to which a fluid discharged from the main bed 200 is introduced and in which impurities are removed from the fluid by an adsorbent.

As shown in FIG. 8, as Embodiment 2-3, the adsorption bed 300 may include a first adsorption bed 300a disposed between the guard bed 100 and the main bed 200, and a second adsorption bed 300b at a rear end of the main bed 200. Here, the first adsorption bed 300a includes an adsorption region to which a fluid discharged from the guard bed 100 is introduced and in which impurities are removed from the fluid by an adsorbent, and a fluid from which impurities have been removed in the adsorption region may be introduced to the reaction region 210 in the main bed 200. In addition, the second adsorption bed 300b may include an adsorption region to which a fluid discharged from the main bed 200 is introduced and in which impurities are removed from the fluid by an adsorbent.

When waste plastic pyrolysis oil and hydrogen are introduced to the reaction region 110 in the guard bed 100, a hydrogenation reaction of the waste plastic pyrolysis oil occurs under a hydrotreating catalyst to remove most of chlorine from the waste plastic pyrolysis oil and produce hydrogen chloride. Besides, a part of olefin is removed and other metal impurities are removed from the waste plastic pyrolysis oil. A fluid including an oil fraction from which other impurities are removed and which is dechlorinated as such, hydrogen chloride, and unreacted hydrogen is introduced to the adsorption region 120 in the guard bed 100, the reaction region 210 in the main bed 200, or the adsorption bed 300. Here, it is preferred that the fluid is introduced as it is to the adsorption region 120 in the guard bed 100, the reaction region 210 in the main bed 200, or the adsorption bed 300 without separate filtration or discharge of impurities or by-products such as hydrogen chloride. When the fluid present in the reaction region 110 in the guard bed 100 is introduced to the adsorption region, a chlorine component in the fluid is adsorbed by an adsorbent, removed from the fluid, and then introduced to the reaction region 210 in the main bed 200, and the denitrification reaction is performed under the hydrotreating catalyst. When the fluid present in the reaction region 110 in the guard bed 100 is introduced to the reaction region in the main bed 200, the denitrification reaction is performed to separate and remove a nitrogen component from the fluid, and then the fluid from which nitrogen has been removed is introduced to the adsorption region 220 in the main bed 200 and chlorine is separated and removed therefrom.

In the main bed 200, specifically, ammonia (NH₃) gas may be produced by the denitrification reaction in the reaction region 210 in the main bed 200, and the produced ammonia gas may react with hydrogen chloride to produce an ammonium salt. Therefore, in an embodiment, the main bed 200 may be provided with a gas outlet from which ammonia gas or mixed gas including the same is discharged. An example of the mixed gas may include vapor, hydrogen sulfide, hydrogen, and the like. In addition, it is preferred that the guard bed 100 has no separate gas outlet. That is, it is preferred that the fluid including hydrogen gas together with the product, the by-product, the hydrogen chloride gas reacted in the guard bed 100 is introduced as it is to the reaction region 210 of the main bed 200.

The guard bed 100 or the main bed 200 which is the reactor of the apparatus for refining waste plastic pyrolysis oil may have both the reaction region and the adsorption region as shown in FIG. 2. In addition, though not shown in the drawing, the adsorption bed 300 may also have both the reaction region and the adsorption region described above, of course. Here, the reaction region refers to a region in which a hydrotreating catalyst is provided and waste plastic pyrolysis oil or a material derived therefrom introduced reacts with hydrogen, as described above.

As a preferred example, when an adsorption region 220 is present in the rear end of the reaction region 210 in the main bed 200, or the adsorption bed 300 is present at the rear end of the main bed 200, as shown in FIGS. 4, 5, 7, 8, and 9, the production and the accumulation of an ammonium salt may be further minimized. In particular, as shown in FIG. 9, when the adsorption bed 300 is present at the rear end of the main bed 200 while the adsorption region 220 is present at the rear end of the reaction region 210 in the main bed 200, the production and the accumulation of an ammonium salt may be further minimized. When these are satisfied, hydrogen chloride produced is evenly adsorbed in each adsorption region 120 or 220 or the adsorption bed 300, thereby minimizing the production and the accumulation of an ammonium salt.

The waste plastic pyrolysis oil refers to a hydrocarbon oil mixture produced by pyrolysis of waste plastic. The mixture may include impurities such as a chlorine compound, a nitrogen compound, and a metal compound, in addition to a hydrocarbon oil; impurities present in the form of a compound to which chlorine, nitrogen, or metal is bonded in the hydrocarbon; and hydrocarbons in the form of olefin which is not required. As a specific example, the waste plastic pyrolysis oil may contain 300 ppm or more of nitrogen and 30 ppm or more of chlorine, and may contain 20 vol% or more of olefin (based on 1 atm) and 1 vol% or more of conjugated diolefin (based on 1 atm).

As described above, an embodiment includes a guard bed 100 having a reaction region 110 to which the waste plastic pyrolysis oil and hydrogen are supplied and in which a dechlorination reaction is performed under a hydrotreating catalyst, wherein a supply flow rate of the waste plastic pyrolysis oil and the hydrogen introduced to the reaction region 110 is only a flow rate at which the dechlorination reaction may be performed, and for example, a volume flow rate based on 1 atm may be 1:300 to 3,000, specifically 1:500 to 2,500. However, this is described as a preferred example, and an embodiment is not interpreted as being limited thereto.

The hydrotreating catalyst, specifically, a first hydrotreating catalyst or a second hydrotreating catalyst, may be various known kinds of catalysts as long as it allows a hydrogenation reaction to add hydrogen to hydrocarbon oil of waste plastic pyrolysis oil to be performed. As a specific example, the hydrotreating catalyst may include any one or two or more selected from a hydrodesulfurization catalyst, a hydrodenitrification catalyst, a hydrodechlorination catalyst, a hydrodemetallization catalyst, and the like. The catalyst allows the denitrification reaction or the dechlorination reaction to be performed depending on the conditions such as temperature described above, as a demetallization reaction is performed. As a specific example, the catalyst may be those having an active metal having hydrotreating catalytic ability, and specifically, an active metal may be supported on a support. Any active metal may be used as long as it has required catalytic ability, and for example, may include any one or more selected from molybdenum, nickel, and the like. Any support may be used as long as it has durability to support the active metal, and for example, may include any one or two or more selected from element including any one or two or more selected from silicon, aluminum, zirconium, titanium, and manganese, and the like; oxides of the element; and carbon-based materials including any one or two or more selected from carbon black, active carbon, graphene, carbon nanotubes, graphite, and the like; and the like. A specific example may be a catalyst which is a support on which an active metal including 0.1 to 10 wt% of nickel and 0.1 to 30 wt% of molybdenum with respect to the total weight is supported. However, this is described as a specific example, and an embodiment is not interpreted as being limited thereto.

For the adsorption region, the adsorbent is provided inside the reactor and the inside of the reactor may be designed so that a fluid including waste plastic pyrolysis oil is brought into contact with the adsorbent. As a specific example, the adsorption layer filled with a plurality of adsorbents is provided inside the reactor at a specific thickness, so that the fluid passes through the adsorption layer from top to bottom to perform adsorption. As a specific example, an average thickness of the adsorption layer may be properly adjusted depending on the flow rate of the fluid, the size of the inside of the reactor, a required processing speed, and the like, and for example, may be 0.5 to 10 cm, specifically 1 to 5 cm. However, this is described as a specific example, and an embodiment is not interpreted as being limited thereto.

The adsorbent may be various known types of adsorbents as long as it may adsorb a chlorine component and other chlorine compounds contained in an organic material.

The adsorbent may be various kinds as long as it may adsorb a chlorine component in oil. As a specific example, the adsorbent may include any one or two or more selected from metal oxides, metal hydroxides, metal carbides, and the like. The metal of the metal oxide, the metal hydroxide, and the metal carbide of the adsorbent may include any one or two or more selected from calcium, magnesium, aluminum, iron, and the like. As a specific example, the adsorbent may include any one or two or more selected from calcium oxide, magnesium oxide, aluminum oxide, iron oxide (Fe₃O4, Fe₂O₃), calcium hydroxide, magnesium hydroxide, aluminum hydroxide, iron hydroxide, iron carbide (Fe-C composite), calcium carbide (CaH-C composite), and the like. However, this is described as a preferred example, and an embodiment is not interpreted as being limited thereto.

In addition, the adsorbent may be a mixture of a hydrotreating catalyst and an adsorbent. When this is satisfied, the life and the durability of the catalyst and the adsorbent may be improved, and a pressure drop may be decreased to further increase an operation duration. Specifically, the adsorbent may include any one or more selected from a catalyst/adsorbent mixture in which catalyst particles including the hydrotreating catalyst and adsorbent particles including the adsorbent are physically mixed; and a catalyst/adsorbent molded body in which a plurality of adsorbent particles including the adsorbent are dispersed apart from each other on a matrix including the hydrotreating catalyst.

As a specific example, when the adsorbent is the catalyst/adsorbent mixture, a mixing weight ratio of the catalyst particles and the adsorbent particles is not largely limited, but for example, may be 1:0.2 to 5, specifically 1:0.5 to 2.

As a specific example, when the adsorbent is the catalyst/adsorbent molded body, a mixing weight ratio of the catalyst particles and the adsorbent particles is not largely limited, but for example, may be 1:0.5 to 20, specifically 1:1 to 10.

The adsorbent may have a specific shape, a specific average particle diameter, a pore structure, and/or a high specific surface area in the form or structure thereof. For example, the adsorbent may have various forms such as a spherical shape, a flake shape, a rod shape, and a needle shape, an average particle diameter of 0.01 to 5 mm, specifically 0.1 to 2 mm, and more specifically 0.2 to 1 mm, and a structure of high specific area and porosity and low density. However, this is described as a specific example, and an embodiment is not interpreted as being limited thereto.

When adsorption is performed by operating the apparatus for a long time in the adsorption region, adsorption efficiency is decreased as the adsorption capacity of the adsorbent approaches the maximum, and thus, in order to continuously operate the apparatus while implementing the effect described above, a regeneration process to remove adsorbed components by desorption from the adsorbent at an appropriate cycle should be performed.

As a means for the regeneration process, for example, a means in which a plurality of adsorption beds 300 are connected in parallel so that an adsorption mode and a regeneration mode are alternately performed may be used.

As a preferred example, the first adsorption bed 300a may include a plurality of adsorption beds including a 1-1 adsorption bed 301a and a 1-2 adsorption bed 302a in which each of the adsorption beds is connected in parallel with each other, the second adsorption bed 300b includes a plurality of adsorption beds including a 2-1 adsorption bed 301b and a 2-2 adsorption bed 302b in which each of the adsorption beds may be connected in parallel with each other. The apparatus may further include an adsorption-regeneration control unit which switches the adsorption beds connected in parallel with each other, thereby controlling adsorption and regeneration to be alternately performed, thereby constantly refining waste plastic pyrolysis oil.

More specifically, the 1-1 adsorption bed 301a and the 1-2 adsorption bed 302a are connected between the guard bed 100 and the main bed 200, in which each of the adsorption beds is connected in parallel with each other, and the 2-1 adsorption bed 301b and the 2-2 adsorption bed 302b are connected to the rear end of the main bed 200, in which each of the adsorption beds may be connected in parallel with each other.

Further, the adsorption-regeneration control unit may perform control of a 1-1 mode in which a connection of the guard bed 100, the 1-2 adsorption bed 302a, and the main bed 200 is cut to regenerate the 1-2 adsorption bed 302a and perform adsorption by the 1-1 adsorption bed 301a; or a 1-2 mode in which a connection of the guard bed 100, the 1-1 adsorption bed 301a, and the main bed 200 is cut to regenerate the 1-1 adsorption bed 301a and perform adsorption by the 1-2 adsorption bed 302a.

In addition, the adsorption-regeneration control unit may perform control of a 2-1 mode in which a connection of the main bed 200 and the 2-2 adsorption bed 302b is cut to regenerate the 2-2 adsorption bed 302b and perform adsorption by the 2-1 adsorption bed 301b; or a 2-2 mode in which a connection of the main bed 200 and the 2-1 adsorption bed 301b is cut to regenerate the 2-1 adsorption bed 301b and perform adsorption by the 2-2 adsorption bed 302b.

A method for refining waste plastic pyrolysis oil has substantially the same technical concept as the apparatus for refining waste plastic pyrolysis oil described above, and specifically, includes: a chlorine removal step of dechlorinating the waste plastic pyrolysis oil and hydrogen at a first temperature under a first hydrotreating catalyst; and a nitrogen removal step of denitrifying a fluid including a product from the dechlorination reaction at a second temperature higher than the first temperature under a second hydrotreating catalyst, wherein an impurity removal step of removing impurities by an adsorbent is further included, after the chlorine removal step.

In the nitrogen removal step, ammonia (NH₃) gas may be produced by the denitrification reaction, and the produced ammonia gas may react with hydrogen chloride to produce an ammonium salt. Therefore, the method for refining waste plastic pyrolysis oil according to an embodiment may further include a step of discharging ammonia gas or mixed gas including the same, during the nitrogen removal step or after the nitrogen removal step. An example of the mixed gas may include vapor, hydrogen sulfide, hydrogen, and the like. In addition, the fluid including the product from the dechlorination reaction, used as a reactant in the nitrogen removal step may be used by introducing both gaseous hydrogen and an oil fraction discharged from the chlorine removal step to the nitrogen removal step. That is, it is preferred that the guard bed 100 which is the reactor which may be used in the chlorine removal step has no separate gas outlet, and thus, the fluid including the product, hydrogen, by-products, and the like of the chlorine removal step may be introduced as it is to the nitrogen removal step and react.

The impurity removal step is a step performed after the chlorine removal step, and may be performed between the chlorine removal step and the nitrogen removal step, or may be performed after the nitrogen removal step. In addition, a first impurity removal step may be performed between the chlorine removal step and the nitrogen removal step, or a second impurity removal step may be performed after the nitrogen removal step. Here, the first impurity removal step and the second impurity removal step have the same configuration as the impurity removal step described above.

The method for refining waste plastic pyrolysis oil according to an embodiment may further include a step of desorbing impurities from the adsorbent having impurities such as the chlorine component adsorbed thereon to regenerate the adsorbent.

Hereinafter, the present invention will be described in detail by the Examples; however, the Examples are for describing the present invention in more detail, and the scope of the present invention is not limited to the following Examples.

### [Example 1]

As shown in FIG. 3, a process in which a guard bed which was a first reactor having a reaction region with a hydrotreating catalyst and an adsorption region with an adsorbent and a main bed which was a second reactor having a reaction region with a hydrotreating catalyst were connected in series was designed and operated to obtain refined oil formed by removing impurities from waste plastic pyrolysis oil. At this time, the waste plastic pyrolysis oil was a hydrocarbon oil mixture containing a high concentration of impurities of 1,053 ppm of nitrogen (N), 600 ppm of chlorine (Cl), 20 vol% or more of olefin, and 1 vol% or more of conjugated diolefin.

Specifically, in the guard bed, the reaction region in which a molybdenum sulfide (MoS)-based catalyst which was a hydrotreating catalyst was provided so that waste plastic pyrolysis oil and hydrogen reacted was formed on the upper portion of the bed, and the adsorption region in which an adsorption layer (layer volume: 2 cc, layer thickness: 2.5 cm) filled with calcium oxide particles (particle diameter: 0.55 mm) which was an adsorbent was provided so that chlorine in the fluid introduced from the reaction region was adsorbed on the adsorbent was formed in the lower portion of the bed. In addition, in the main bed, a reaction region in which the same hydrotreating catalyst as the above was provided so that the waste plastic pyrolysis oil and hydrogen in the fluid introduced from the adsorption region in the guard bed reacted was formed.

The waste plastic pyrolysis oil and hydrogen gas were supplied to the upper portion of the guard bed so that the waste plastic pyrolysis oil and hydrogen gas reacted in the reaction region in the guard bed to remove impurities such as olefin, metal, and a part of the chlorine component from the waste plastic pyrolysis oil, and then the remaining chlorine component was removed by adsorption by an adsorbent in the adsorption region in the guard bed. Then, the waste plastic pyrolysis oil and hydrogen in the fluid discharged through the adsorption region were hydrogenated again in the reaction region in the main bed to remove a nitrogen component. Subsequently, gas contained in the fluid such as ammonia gas, hydrogen chloride gas, vapor, hydrogen sulfide gas, and hydrogen was discharged from the main bed to obtain refined oil separated from the gas.

Each operation condition of the guard bed and the main bed is shown in the following Table 1.

**[Table 1]**

| | Guard bed | Main bed |
|---|---|---|
| Temperature (°C) | 250 | 350 |
| Pressure (bar) | 50 | |
| H_{2/}oil ratio | 840 | |
| Liquid hourly space velocity (LHSV) | 0.7 h⁻¹ | |

### [Example 2]

As shown in FIG. 4, a process in which a guard bed which was a first reactor having a reaction region with a hydrotreating catalyst and a main bed which was a second reactor having a reaction region with a hydrotreating catalyst and an adsorption region with an adsorbent were connected in series was designed and operated to obtain refined oil formed by removing impurities from waste plastic pyrolysis oil. At this time, the waste plastic pyrolysis oil was the same as that of Example 1.

Specifically, in the guard bed, the reaction region in which the same hydrotreating catalyst as that of Example 1 was provided to react the waste plastic pyrolysis oil and hydrogen was formed in the bed. In addition, in the main bed, the reaction region in which the same hydrotreating catalyst as that of Example 1 was provided to react the waste plastic pyrolysis oil and hydrogen was formed on the upper portion of the bed, and the adsorption region in which the same adsorption layer as that of Example 1 was provided to adsorb chlorine in the fluid introduced from the reaction region on the adsorbent was formed in the lower portion of the bed.

The waste plastic pyrolysis oil and hydrogen gas were supplied to the guard bed so that the waste plastic pyrolysis oil and hydrogen gas reacted in the reaction region in the guard bed to remove impurities such as olefin, metal, and a part of the chlorine component from the waste plastic pyrolysis oil. Further, the waste plastic pyrolysis oil and hydrogen in the fluid discharged through the reaction region in the guard bed were hydrogenated again in the reaction region of the main bed to remove the nitrogen component, and then a remaining chlorine component was removed by adsorption by the adsorbent in the adsorption region in the main bed. Subsequently, gas contained in the fluid such as ammonia gas, hydrogen chloride gas, vapor, hydrogen sulfide gas, and hydrogen was discharged from the main bed to obtain refined oil separated from the gas.

Each operation condition of the guard bed and the main bed is the same as in Example 1.

### [Example 3]

As shown in FIG. 5, a process in which a guard bed which was a first reactor having a reaction region with a hydrotreating catalyst and an adsorption region with an adsorbent and a main bed which was a second reactor having a reaction region with a hydrotreating catalyst and an adsorption region with an adsorbent were connected in series was designed and operated to obtain refined oil formed by removing impurities from waste plastic pyrolysis oil. At this time, the waste plastic pyrolysis oil was the same as that of Example 1.

Specifically in the guard bed and in the main bed, the reaction region in which the same hydrotreating catalyst as that of Example 1 was provided to react the waste plastic pyrolysis oil and hydrogen was formed on the upper portion of the bed, and the adsorption region in which the same adsorption layer as that of Example was provided to adsorb chlorine in the fluid introduced from the reaction region on the adsorbent was formed in the lower portion of the bed.

The waste plastic pyrolysis oil and hydrogen gas were supplied to the guard bed so that the waste plastic pyrolysis oil and hydrogen gas reacted in the reaction region in the guard bed to remove impurities such as olefin, metal, and a part of the chlorine component from the waste plastic pyrolysis oil, and then a part of the chlorine component was removed by adsorption by an adsorbent in the adsorption region in the guard bed. Further, the waste plastic pyrolysis oil and hydrogen in the fluid discharged through the adsorption region were hydrogenated again in the reaction region of the main bed to remove the nitrogen component, and then a remaining chlorine component was removed by adsorption by the adsorbent in the adsorption region in the main bed. Subsequently, gas contained in the fluid such as ammonia gas, hydrogen chloride gas, vapor, hydrogen sulfide gas, and hydrogen was discharged from the main bed to obtain refined oil separated from the gas.

Each operation condition of the guard bed and the main bed is the same as in Example 1.

### [Example 4]

As shown in FIG. 6, a process in which a guard bed which was a first reactor having a reaction region with a hydrotreating catalyst, an adsorption bed which was a second reactor having an adsorption region with an adsorbent, and a main bed which was a third reactor having a reaction region with a hydrotreating catalyst were sequentially connected in series was designed and operated to obtain refined oil formed by removing impurities from waste plastic pyrolysis oil. At this time, the waste plastic pyrolysis oil was the same as that of Example 1.

Specifically, in the guard bed and in the main bed, the reaction region in which the same hydrotreating catalyst as that of Example 1 was provided to react the waste plastic pyrolysis oil and hydrogen was formed, respectively. In addition, in the adsorption bed, an adsorption region in which the same adsorption layer as that of Example 1 was provided so that chlorine in the fluid introduced from the reaction region in the guard bed was adsorbed on the adsorbent was formed. Further, the fluid discharged from the adsorption region in the adsorption bed was introduced to the main bed.

The waste plastic pyrolysis oil and hydrogen gas were supplied to the guard bed so that the waste plastic pyrolysis oil and hydrogen gas reacted in the reaction region in the guard bed to remove impurities such as olefin, metal, and a part of the chlorine component from the waste plastic pyrolysis oil. Further, from the fluid including pyrolysis oil and hydrogen discharged through the reaction region in the guard bed, a remaining chlorine component was removed by adsorption by an adsorbent in the adsorption region in the adsorption bed. Then, the waste plastic pyrolysis oil and hydrogen in the fluid discharged through the adsorption region were hydrogenated again in the reaction region in the main bed to remove a nitrogen component. Subsequently, gas contained in the fluid such as ammonia gas, hydrogen chloride gas, vapor, hydrogen sulfide gas, and hydrogen was discharged from the main bed to obtain refined oil separated from the gas.

Each operation condition of the guard bed and the main bed was the same as in Example 1, and the operation conditions of the adsorption bed are as shown in the following Table 2.

**[Table 2]**

| | Adsorption bed |
|---|---|
| Temperature (°C) | 350 |
| Pressure (bar) | 50 |
| Liquid hourly space velocity (LHSV) | 0.7 h⁻¹ |

### [Example 5]

As shown in FIG. 7, a process in which a guard bed which was a first reactor having a reaction region with a hydrotreating catalyst, a main bed which was a second reactor, and an adsorption bed which was a third reactor having an adsorption region with an adsorbent were sequentially connected in series was designed and operated to obtain refined oil formed by removing impurities from waste plastic pyrolysis oil. At this time, the waste plastic pyrolysis oil was the same as that of Example 1.

Specifically, the inside of the guard bed, the inside of the main bed, and the inside of the adsorption bed were the same as those of Example 4.

The waste plastic pyrolysis oil and hydrogen gas were supplied to the guard bed so that the waste plastic pyrolysis oil and hydrogen gas reacted in the reaction region in the guard bed to remove impurities such as olefin, metal, and a part of the chlorine component from the waste plastic pyrolysis oil. Then, the waste plastic pyrolysis oil and hydrogen in the fluid discharged through the reaction region in the guard bed were hydrogenated again in the reaction region in the main bed to remove a nitrogen component. Further, the fluid including waste plastic pyrolysis oil and hydrogen discharged through the reaction region in main bed was introduced to the adsorption bed, a remaining chlorine component was removed by adsorption by an adsorbent in the adsorption region in the adsorption bed. Subsequently, gas contained in the fluid such as ammonia gas, hydrogen chloride gas, vapor, hydrogen sulfide gas, and hydrogen was discharged from the adsorption bed to obtain refined oil separated from the gas.

Each operation condition of the guard bed, the main bed, and the adsorption bed is the same as in Example 4.

### [Example 6]

As shown in FIG. 8, a process in which a guard bed which was a first reactor having a reaction region with a hydrotreating catalyst, a first adsorption bed which was a second reactor having an adsorption region with an adsorbent, a main bed which was a third reactor having a reaction region with a hydrotreating catalyst, and a second adsorption bed which was a fourth reactor having an adsorption region with an adsorbent were sequentially connected in series was designed and operated to obtain refined oil formed by removing impurities from waste plastic pyrolysis oil. At this time, the waste plastic pyrolysis oil was the same as that of Example 1.

Specifically, the inside of the guard bed, the inside of the main bed, and the inside of the adsorption bed were the same as those of Example 4.

The waste plastic pyrolysis oil and hydrogen gas were supplied to the guard bed so that the waste plastic pyrolysis oil and hydrogen gas reacted in the reaction region in the guard bed to remove impurities such as olefin, metal, and a part of the chlorine component from the waste plastic pyrolysis oil. Further, the fluid including waste plastic pyrolysis oil and hydrogen discharged through the reaction region in the guard bed was introduced to the first adsorption bed, a part of the chlorine component was removed by adsorption by an adsorbent in the first adsorption region in the adsorption bed. Then, the waste plastic pyrolysis oil and hydrogen in the fluid discharged through the adsorption region in the first adsorption bed were hydrogenated again in the reaction region in the main bed to remove a nitrogen component. Further, the fluid including waste plastic pyrolysis oil and hydrogen discharged through the reaction region in main bed was introduced to the second adsorption bed, a remaining chlorine component was removed by adsorption by an adsorbent in the second adsorption region in the adsorption bed. Subsequently, gas contained in the fluid such as ammonia gas, hydrogen chloride gas, vapor, hydrogen sulfide gas, and hydrogen was discharged from the second adsorption bed to obtain refined oil separated from the gas.

Each operation condition of the guard bed, the main bed, and the adsorption bed is the same as in Example 4.

### [Comparative Example 1]

Refined oil was obtained in the same manner as in Example 2, except that the operation temperature of the guard bed was the same as the temperature of the main bed.

### [Experimental Example 1] Evaluation of suppressing force of ammonium salt (NH₄Cl)

The effect of suppressing an ammonium salt was evaluated by measuring an operable time without a problem of a pressure drop by Examples 1 to 6, and Comparative Examples 1 to 3. Specifically, refined oil was continuously produced by the apparatuses of each of the examples and the comparative examples, and at this time, a maximum operation time taken until a pressure loss (delta P) and the results therefor are shown in the following Table 3.

**[Table 3]**

| | | | Examples | | | | | | Comparative Examples |
|---|---|---|---|---|---|---|---|---|---|
| | | | 1 | 2 | 3 | 4 | 5 | 6 | 1 |
| Process | | | FIG. 3 | FIG. 4 | FIG. 5 | FIG. 6 | FIG. 7 | FIG. 8 | |
| Reaction region in main bed | | | ∘ | ∘ | ∘ | ∘ | ∘ | ∘ | ∘ |
| Adsorp tion region | In guard bed | | ∘ | × | ∘ | × | × | × | × |
| | In main bed | | × | ∘ | ∘ | × | × | × | ∘ |
| | In adsorpti on bed | Between guard bed and main bed | × | × | × | ∘ | × | ∘ | × |
| | | Rear end of main bed | × | × | × | × | ∘ | ∘ | × |
| P HCl × P NH₃ | | | 1.64E-03 | 4.67E-06 | 4.67E-06 | 1.64E-03 | 4.67E-06 | 4.67E-06 | 3.27E-03 |
| **Maximum operation time (day) until pressure loss** | | | 5 | 12.2 | 24 | >5 | >12.2 | 24 | 2.3 |

The apparatus and the method for refining pyrolysis oil according to an embodiment prevent or minimize production of an ammonium salt (NH₄Cl), and are excellent in prevention of corrosion of a reactor, improvement of durability, differential pressure occurrence, and process efficiency, in a process of refining waste plastic pyrolysis oil containing impurities including chlorine and nitrogen.

In addition, the apparatus and the method for refining pyrolysis oil have very low contents of impurities such as chlorine, nitrogen, metal, and the like, and olefin, and have excellent quality.

### [Detailed Description of Main Elements]

- 100:: Guard bed
- 110:: Reaction region in guard bed
- 120:: Adsorption region in guard bed
- 200:: Main bed
- 210:: Reaction region in main bed
- 220:: Adsorption region in main bed
- 300:: Adsorption bed
- 300a:: First adsorption bed
- 301a:: 1-1 adsorption bed
- 302a:: 1-2 adsorption bed
- 300b:: Second adsorption bed
- 301b:: 2-1 adsorption bed
- 302b:: 2-2 adsorption bed

## Claims

1. An apparatus for refining waste plastic pyrolysis oil comprising:
a guard bed including a reaction region to which the waste plastic pyrolysis oil and hydrogen are introduced and in which a dechlorination reaction is performed at a first temperature under a first hydrotreating catalyst; and
a main bed including a reaction region to which a fluid including a product discharged from the guard bed is introduced and in which a denitrification reaction is performed at a second temperature higher than the first temperature under a second hydrotreating catalyst,
wherein the guard bed or the main bed further includes an adsorption region to which a fluid passing through the reaction region is introduced and in which impurities are removed from the fluid by an adsorbent for removing a chlorine component.

2. The apparatus of claim 1, wherein
the guard bed includes the adsorption region, a fluid passing through the reaction region in the guard bed is introduced to the adsorption region, and impurities are removed from the fluid by an adsorbent in the adsorption region, and
the fluid from which impurities have been removed in the adsorption region is introduced to the reaction region in the main bed.

3. The apparatus of any preceding claim, wherein the main bed includes the adsorption region, a fluid passing through the reaction region in the main bed is introduced to an adsorption region, and impurities are removed from the fluid by an adsorbent in the adsorption region.

4. The apparatus of any preceding claim, further comprising: an adsorption bed which is disposed between the guard bed and the main bed and includes an adsorption region to which a fluid including a product discharged from the guard bed is introduced and in which impurities are removed from the fluid by an adsorbent,
wherein the fluid from which impurities have been removed in the adsorption region in the adsorption bed is introduced to the reaction region in the main bed.

5. An apparatus for refining waste plastic pyrolysis oil comprising:
a guard bed including a reaction region to which the waste plastic pyrolysis oil and hydrogen are introduced and in which a dechlorination reaction is performed at a first temperature under a first hydrotreating catalyst;
a main bed including a reaction region to which a fluid including a product discharged from the guard bed is introduced and in which a denitrification reaction is performed at a second temperature higher than the first temperature under a second hydrotreating catalyst to suppress production of ammonium chloride; and
an adsorption bed which is disposed between the guard bed and the main bed or at a rear end of the main bed and includes an adsorption region to which a fluid including a product discharged from the guard bed or the main bed is introduced and in which impurities are removed from the fluid by an adsorbent for removing a chlorine component.

6. The apparatus of claim 5, wherein the adsorption bed includes:
a first adsorption bed disposed between the guard bed and the main bed or
a second adsorption bed disposed at a rear end of the main bed,
wherein the first adsorption bed includes an adsorption region to which a fluid discharged from the guard bed is introduced and in which impurities are removed from the fluid by an adsorbent, and a fluid from which impurities have been removed in the adsorption region is introduced to the reaction region in the main bed, and
the second adsorption bed includes an adsorption region to which a fluid discharged from the main bed is introduced and in which impurities are removed from the fluid by an adsorbent.

7. The apparatus of claim 6, wherein
the first adsorption bed includes a plurality of adsorption beds including a 1-1 adsorption bed and a 1-2 adsorption bed, each of the adsorption beds being connected in parallel with each other,
the second adsorption bed includes a plurality of adsorption beds including a 2-1 adsorption bed and a 2-2 adsorption bed, each of the adsorption beds being connected in parallel with each other, and
an adsorption-regeneration control unit which switches the adsorption beds connected in parallel with each other is further included.

8. The apparatus of claim 7, wherein
the 1-1 adsorption bed and the 1-2 adsorption bed are connected between the guard bed and the main bed in which each of the adsorption beds is connected in parallel with each other,
the 2-1 adsorption bed and the 2-2 adsorption bed are connected to the rear end of the main bed in which each of the adsorption beds is connected in parallel with each other, and
the adsorption-regeneration control unit performs control of:
a 1-1 mode in which a connection of the guard bed, the 1-2 adsorption bed, and the main bed is cut to regenerate the 1-2 adsorption bed and perform adsorption by the 1-1 adsorption bed; or
a 1-2 mode in which a connection of the guard bed, the 1-1 adsorption bed, and the main bed is cut to regenerate the 1-1 adsorption bed and perform adsorption by the 1-2 adsorption bed, or performs control of:
a 2-1 mode in which a connection of the main bed and the 2-2 adsorption bed is cut to regenerate the 2-2 adsorption bed and perform adsorption by the 2-1 adsorption bed; or
a 2-2 mode in which a connection of the main bed and the 2-1 adsorption bed is cut to regenerate the 2-1 adsorption bed and perform adsorption by the 2-2 adsorption bed.

9. The apparatus of any one of claims 5 to 8, wherein the guard bed or the main bed further includes an adsorption region to which a fluid passing through the reaction region is introduced and in which impurities are removed from the fluid by an adsorbent.

10. The apparatus of any preceding claim, wherein the first temperature is 150 to 300°C, and the second temperature is higher than 300°C and 400°C or lower, wherein preferably a difference between the first temperature and the second temperature is 50°C to 250°C.

11. The apparatus of any preceding claim, wherein a pressure in the reaction region is 1 to 100 bar; and/or wherein a volume flow ratio of the waste plastic pyrolysis oil and hydrogen introduced to the reaction region based on 1 atm is 1:300 to 3,000.

12. The apparatus of any preceding claim, wherein
the adsorbent includes any one or two or more selected from metal oxides, metal hydroxide, and metal carbides, and
the metal includes any one or two or more selected from calcium, magnesium, aluminum, and iron.

13. The apparatus of any preceding claim, wherein the first hydrotreating catalyst and the second hydrotreating catalyst include any one or two or more selected from a hydrodesulfurization catalyst, a hydrodenitrification catalyst, and a hydrodemetallization catalyst; and/or wherein the waste plastic pyrolysis oil includes 0.03 wt% of more of nitrogen and 0.003 wt% or more of chlorine, based on a total weight of the pyrolysis oil.

14. A method for refining waste plastic pyrolysis oil, the method comprising:
a chlorine removal step of dechlorinating the waste plastic pyrolysis oil and hydrogen at a first temperature, preferably 150 to 300°C, under a first hydrotreating catalyst; and
a nitrogen removal step of denitrifying a fluid including a product from the dechlorination reaction at a second temperature higher than the first temperature, preferably 300 to 400°C, under a second hydrotreating catalyst,
wherein an impurity removal step of removing impurities by an adsorbent is further included after the chlorine removal step, and
the adsorbent includes any one or two or more selected from metal oxides, metal hydroxides, and metal carbides.

15. The method of claim 14, wherein the impurity removal step is performed between the chlorine removal step and the nitrogen removal step or after the nitrogen removal step; and/or wherein in the nitrogen removal step, ammonia gas is produced by the denitrification reaction.
